# EUROPÄISCHE PATENTSCHRIFT

(11) **EP 1 527 264 B1**
(45) Veröffentlichungstag und Bekanntmachung des Hinweises auf die Patenterteilung: **30.05.2007**
(21) Anmeldenummer: 03766365.5
(22) Anmeldetag: 30.07.2003
(51) Int. Cl.: F02D 41/14, F01N 11/00, G01J 5/08

(54) **VERFAHREN ZUR ERSTELLUNG VON KENNLINIEN ODER KENNLINIENFELDERN ZUR STEUERUNG VON VERBRENNUNGSKRAFTMASCHINEN**
METHOD FOR GENERATING CHARACTERISTIC FUNCTIONS OR ARRAYS OF CHARACTERISTIC FUNCTIONS FOR CONTROLLING COMBUSTION ENGINES
MÉTHODE POUR LA GÉNÉRATION DE COURBES CARACTÉRISTIQUES OU DE JEUX DE TELLES COURBES POUR LE CONTRÔLE DE MOTEURS À COMBUSTION INTERNE

(30) Priorität: 31.07.2002 DE 10235094; 30.08.2002 DE 10241053
(43) Veröffentlichungstag der Anmeldung: 04.05.2005
(73) Patentinhaber: Volkswagen Aktiengesellschaft, 38436 Wolfsburg (DE); IAV GMBH, 10587 Berlin (DE)
(72) Erfinder: BÜCHNER, Stefan, 38527 Meine (DE); DIEZEMANN, Matthias, 10555 Berlin (DE)
(74) Vertreter: Schneider, Henry
(86) Internationale Anmeldenummer: PCT/EP2003/008431
(87) Internationale Veröffentlichungsnummer: WO 2004/013475

(56) Entgegenhaltungen:
- EP-A- 0 556 554
- EP-A- 1 136 671
- DE-A- 3 407 911
- DE-A- 19 833 596
- US-A- 5 342 783
- DING K.: 'TEST OF JET ENGINE TURBINE BLADES BY THERMOGRAPHY' OPTICAL ENGINEERING, SOC. OF PHOTO-OPTICAL INSTRUMENTATION ENGINEERS Bd. 24, Nr. 6, November 1985, Seiten 1055 - 1059, XP002045762

## Beschreibung

Die Erfindung betrifft ein Verfahren zur Messung der Temperatur eines von einem Abgas einer Verbrennungskraftmaschine durchströmten Katalysators.

Um eine Verminderung von umweltschädlichen Abgasbestandteilen in Abgasen von Verbrennungskraftmaschinen zu erzielen, ist bekannt, Katalysatorsysteme mit mindestens einem Katalysator in einem Abgaskanal der Verbrennungskraftmaschine anzuordnen. Je nach Katalysatortyp bewirkt der Katalysator eine Konvertierung einer oder mehrerer Abgasbestandteile, wie unverbrannte Kohlenwasserstoffe HC, Kohlenmonoxid CO und Stickoxiden NOₓ, in weniger umweltrelevante Produkte. Zudem sind Katalysatoren bekannt, die neben einer katalytischen Komponente über Speicherkomponenten verfügen, die in der Lage sind, bestimmte Schadstoffe zu absorbieren. So werden insbesondere bei magerlauffähigen Verbrennungskraftmaschinen NOₓ-Speicherkatalysatoren eingesetzt, die in mageren Betriebsphasen mit Lambda > 1 NOₓ absorbieren und in zwischengeschalteten Regenerationsphasen mit Lambda ≤ 1 eine Reduzierung des gespeicherten NOₓ vornehmen.

Ein gemeinsames Merkmal praktisch aller Katalysatoren, insbesondere auch von NOₓ-Speicherkatalysatoren, besteht in der starken Temperaturabhängigkeit der Katalysatoraktivität. Insbesondere benötigt jeder Katalysator einerseits eine gewisse Mindesttemperatur, unterhalb derer praktisch keine Konvertierung und/oder adsorbierende Speicherung von Schadstoffen stattfindet. Andererseits unterliegen die Katalysatoren einer thermischen Alterung, die zu einer Verschlechterung des Wirkungsgrades des Katalysators führt. Insbesondere hohe Temperaturbelastungen führen zu einer Beeinträchtigüng des Trägermaterials und des katalytisch wirksamen Materials. Die maximal zulässigen Betriebstemperaturen von Katalysatorsystemen liegen bei zirka 1000 °C bis maximal 1100°C bei 3-Wege-Katalysatoren und bei etwa 900 °C im Fall von NOₓ-Speicherkatalysatoren.

Während des bestimmungsgemäßen Einsatzes einer mit einem Katalysatorsystem ausgestatteten Verbrennungskraftmaschine kann es insbesondere in dynamischen Fahrzyklen, beispielsweise Volllast-Schub-Volllast-Zyklen, oder in längeren Volllastphasen zu einer derartigen Erhöhung der Abgastemperaturen kommen, dass die thermisch kritische Betriebstemperatur des Katalysatorsystems, hier insbesondere von nahe der Verbrennungskraftmaschine angeordneten Katalysatoren, erreicht wird. Aufgrund der ungleichmäßigen Anströmung des Katalysators durch das Abgas kommt es dabei insbesondere auch zu einer örtlich inhomogenen Temperaturverteilung und lokalen Temperaturspitzen.

Bekannt ist, in einem Motorsteuergerät der Verbrennungskraftmaschine Betriebsparameter der Verbrennungskraftmaschine vorzugeben, so dass diese in allen möglichen statischen und dynamischen Fahrzyklen so gesteuert wird, dass die Bauteiltemperatur des Katalysators einen Mindestabstand zur kritischen Betriebstemperatur des Katalysatorsystems aufweist.

Um diese Betriebsparameter der Verbrennungskraftmaschine zu ermitteln, muss das Temperaturverhalten des Katalysators in Abhängigkeit der Betriebsparameter bekannt sein.

Bekannt ist, dass dieses Temperaturverhalten von Katalysatoren an Motorprüfständen ermittelt wird. Hierbei sind unterschiedliche Messverfahren bekannt. Einerseits werden die Katalysatoren mit Thermoelementen bestückt, die durch geeignete Durchführungen in den Katalysator eingebracht werden. Hierbei ist nachteilig, dass bei der Temperaturmessung der Temperatureinfluss des Abgases von Temperatureinflüssen der Katalysatorbauelemente selber nicht getrennt werden kann. Ferner besitzen die Thermoelemente eine physikalisch bedingte thermische Trägheit, so dass die ermittelten Temperaturwerte mit einem Fehler behaftet sind. Nachteilig ist auch, dass die Zellstruktur des Katalysatorträgers (Metall- oder Keramikträger) zur Anbringung des Thermoelements und auch die Anströmung des Katalysators durch das Thermoelement gestört wird. Darüber hinaus unterliegt der Schutzmantel der Signalleitung dem thermischen Einfluss abseits von dem Messort an der Spitze des Thermoelementes, so dass auch hierdurch Fehler auftreten.

Ferner ist bekannt, das Temperaturverhalten des Katalysators mittels einer schnellen Messung der HC-Emission vor dem Katalysator zu ermitteln. Hierbei wird bei definierten Betriebsparametern der Verbrennungskraftmaschine die HC-Emission gemessen oder rechnerisch modelliert und hieraus - aufgrund der bekannten Wärmefreisetzung (Exothermie) im Katalysator bei der HC-Konvertierung - auf die Katalysatortemperatur geschlossen.

Aus DE 198 33 596 A1 ist eine Vorrichtung zur Messung von Oberflächentemperaturen bekannt, bei der mittels einer fest installierten oder schwenkbar gelagerten Infrarot-Thermographiekamera die Oberfläche des zu messenden Gutes periodisch abgetastet wird. Das hierdurch von der Infrarot-Thermographiekamera gelieferte Signal wird mit einem Referenzsignal eines Referenzstrahlers bekannter Temperatur korreliert, so dass die tatsächliche Oberflächentemperatur des zu überwachenden Gutes ermittelbar ist. Die bekannte Vorrichtung wird zur Überwachung von Müll, Abfällen und brennbaren Materialien, also als vorbeugender Brandschutz, eingesetzt.

Die US 5,342, 783 beschreibt ein Verfahren zur Ermittlung einer Reaktionszone eines Katalysators, insbesondere eines Abgaskatalysators, wobei beispielsweise mittels einer IR-Kamera eine Temperaturverteilung entlang des Katalysatormantels in Strömungsrichtung des Abgases ermittelt wird.

Aus EP 556 554 A2 ist ein Verfahren zur Bestimmung der Temperaturverteilung über den Austrittsquerschnitt eines Katalysators bekannt, um die Aktivität und Aufheizgeschwindigkeit verschiedener Katalysatorbeschichtungen zu untersuchen. Zu diesem Zweck wird der Katalysator in einem stabilen Betriebspunkt mit einem Abgas einer definierten Temperatur einer Verbrennungskraftmaschine angeströmt und die Temperaturverteilung exakt nach einer Minute in Form einer Momentaufnahme mittels einer Infrarotkamera aufgenommen.

DE 34 07 911 A1 beschreibt ein Verfahren zur Erkennung von Fehlerstellen, nämlich Entklebungsstellen, an Bauteilen wie Flugzeugtragflächen. Zu diesem Zweck wird das Bauteil von einer Umgebungstemperatur in eine andere Umgebungstemperatur überführt, um einen Wärmefluss im Bauteil zu induzieren. Mittels IR-Messung wird eine Temperaturverteilung auf der Bauteiloberfläche visualisiert, wobei die Fehlerstellen in Form von Farbkontrasten sichtbar werden.

Der Erfindung liegt die Aufgabe zugrunde, ein Verfahren der gattungsgemäßen Art anzugeben, mittels dem in einfacher Weise eine Oberflächentemperatur eines Katalysatores festgestellt werden kann derart, dass ein zuverlässigerer Schutz des Katalysators vor thermischen Schädigungen erreicht wird.

Erfindungsgemäß wird diese Aufgabe durch ein Verfahren mit den im Anspruch 1 genannten Merkmalen gelöst. Dadurch, dass zur Messung der Temperatur des von einem Abgas durchströmten Katalysators eine Bildaufzeichnungseinrichtung verwendet wird, deren Objectiv zumindest zeitweise auf eine vom Abgas angeströmte beziehungsweise durchströmte Messfläche des Katalysators gerichtet ist, und eine Auswerteeinrichtung verwendet wird, mittels der aus wenigstens einer von der Bildaufzeichnungseinrichtung aufgenommenen Bildsequenz ein Temperaturprofil der vom Abgas angeströmten beziehungsweise durchströmten Messfläche erstellbar ist, ist vorteilhaft möglich, das Temperaturprofil der Messfläche einerseits berührungslos und andererseits unmittelbar an der Messfläche selber zu erfassen. Somit wird das erhaltene Messergebnis nicht durch eine thermische Trägheit verwendeter Messmittel beeinträchtigt. Es ist die tatsächliche Festkörpertemperatur des Katalysatorträgerkörpers und seiner katalytischen Beschichtung (Washcoat) ermittelbar. Insbesondere kann somit der Temperaturverlauf dynamisch erfasst werden, so dass Veränderungen an der Oberflächentemperatur unmittelbar und verzögerungsfrei feststellbar sind. Die Genauigkeit der ermittelten Temperatur ist somit gegenüber bekannten Messsystemen wesentlich erhöht.

In bevorzugter Ausgestaltung der Erfindung ist vorgesehen, dass die Bildaufzeichnungseinrichtung eine Thermographiekamera, insbesondere eine Infrarot-Thermographiekamera, vorzugsweise eine Nah-Infrarot-Thermographiekamera ist. Hierdurch wird vorteilhaft erreicht, das Temperaturprofil in einfacher Weise mittels thermographischer Messmittel zu erfassen, indem eine der tatsächlichen Ist-Temperatur entsprechende elektromagnetische Strahlung (Festkörperstrahlung) gemessen wird, die von dem Katalysator abgestrahlt wird.

Entsprechend der gewählten Messfläche lässt sich so in einfacher Weise auch der Temperaturverlauf über der Fläche ermitteln.

In bevorzugter Ausgestaltung der Erfindung ist vorgesehen, dass die Thermographiekamera die Bildsequenzen digital aufnimmt und abspeichert. So wird eine nachfolgende Auswertung in einfacher Weise möglich. Insbesondere, wenn die Thermographiekamera mit einer relativ hohen Bildwiederholfrequenz angesteuert wird, die mindestens 1 Hz, vorzugsweise mindestens 50 Hz, beträgt, lässt sich das Temperaturprofil der Messfläche dynamisch über der Zeit mit hoher Zeitauflösung verfolgen. Es sind sogar Messfrequenzen bis in den kHz-Bereich möglich, wodurch Temperaturimpulse bis in den ms-Bereich aufgelöst werden können. Die Messergebnisse stehen somit in hoher Auflösung und hoher Genauigkeit zur Verfügung. Insbesondere können so auch kurzfristige. Temperaturüberschwinger detektiert werden.

Durch die mit der erfindungsgemäßen Verfahren verbundene Möglichkeit, das Temperaturprofil genau und mit hoher Dynamik ermitteln zu können, besteht die Möglichkeit, dynamische Temperaturspitzen zu erkennen.

Dadurch, dass eine Oberflächentemperatur wenigstens einer ausgewählten Messfläche eines von einem Abgas einer Verbrennungskraftmaschine durchströmten Katalysators optisch, insbesondere thermographisch, ermittelt wird, lässt sich das erfindungsgemäße Messverfahren in einfacher Weise in einen Motorprüfstand integrieren. Somit ist ein hochgenaues, dynamisches Erfassen des momentanen Temperaturprofils einer Oberfläche eines Katalysators in einfacher Weise möglich.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine schematische Darstellung der Vorrichtung;
- Figur 2: eine schematische Schnittdarstellung durch einen erfindungsgemäßen Messaufbau;
- Figur 3: einen mit der Vorrichtung im dynamischen Testzyklus ermittelten zeitlichen Temperaturverlauf einer Katalysatormessfläche;
- Figur 4: Kalibrierkurve mit unter stationären Bedingungen aufgenommenen Messpunkten;
- Figuren 5: Zeitliche Temperaturverläufe aufgenommen mit der erfindungsgemäßen Temperaturmessung und zwei Temperaturmessungen gemäß Stand der Technik und
- Figur 6: zeitliche Temperaturgradienten des erfindungsgemäß ermittelten Temperaturverlaufs und gemäß Stand der Technik.

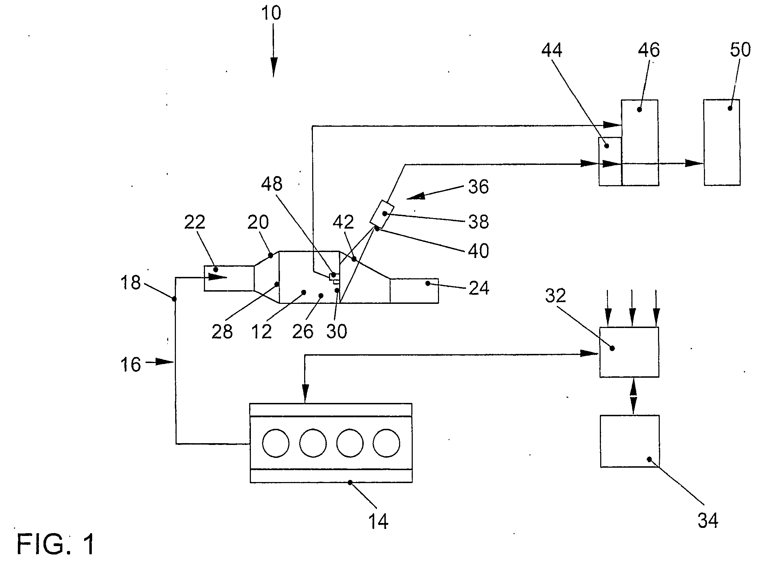

Figur 1 zeigt eine insgesamt mit 10 bezeichnete Vorrichtung zur Messung der Temperatur eines von einem Abgas einer Verbrennungskraftmaschine durchströmten oder durchströmbaren Katalysators 12. Die Vorrichtung 10 ist Bestandteil eines im Einzelnen nicht dargestellten dynamischen Motorprüfstandes für Verbrennungskraftmaschinen 14. Der Katalysator 12 ist in einem Abgasstrang 16 der Verbrennungskraftmaschine 14 angeordnet und mit dem Abgas 18 beaufschlagbar. Der Katalysator 12 umfasst ein Gehäuse 20 mit einem Einlassstutzen 22 für das unbehandelte Abgas 18 und einem Auslassstutzen 24 für das katalytisch behandelte Abgas 18. Innerhalb des Gehäuses 20 ist der Katalysatorträger (auch Katalysatormatrix genannt) 26 angeordnet, der mit einer katalytisch wirksamen Beschichtung beschichtet ist. Beispielsweise handelt es sich um einen Metallkatalysatorträger, der typischerweise als Wickelkatalysator ausgebildet ist. Hierbei wird bekanntermaßen eine die katalytisch wirksame Beschichtung tragende Metallfolie als Katalysatorwicklung bereitgestellt und in das Gehäuse 20 gasdicht eingepasst. Nachfolgend wird von einer Katalysatorwicklung ausgegangen. Der Katalysatorträger 26 besitzt eine erste Stirnfläche 28, über die das Abgas 18 in den Katalysatorträger 26 einströmt, und eine zweite Stirnfläche 30, über die das katalytisch behandelte Abgas 18 ausströmt. Neben Metallkatalysatorenträger sind auch Keramikträger, so genannte Monolithe oder dergleichen einsetzbar.

Der Verbrennungskraftmaschine 14 ist ein Motorsteuergerät 32 zugeordnet, mittels dem den Arbeitsmodus der Verbrennungskraftmaschine 14 beeinflussende Betriebsparameter, wie beispielsweise Zündwinkel, Drosselklappenstellung, Einspritzzeitpunkte, einzuspritzende Kraftstoffmengen, Ventilsteuerungen oder dergleichen, vorgebbar sind. Diese Parameter werden üblicherweise in Abhängigkeit von einem Betriebspunkt, wie Motorlast oder Motordrehzahl vorgegeben, wobei abgespeicherte Kennfelder verwendet werden. Das Motorsteuergerät 32 wirkt mit einem Getriebesteuergerät 34 zusammen, so dass dem Motorsteuergerät 32 auch die Betriebsparameter eines - in Figur 1 nicht dargestellten-Getriebes der Verbrennungskraftmaschine 14 bekannt sind.

Die Vorrichtung 10 umfasst ferner eine Bildaufzeichnungseinrichtung 36, die als Nah-Infrarot-Thermographiekamera 38 ausgebildet ist. Ein Objektiv 40 ist über ein optisches Fenster 42 auf die Stirnfläche 30 der Katalysatorwicklung 26 gerichtet. Die Stirnfläche 30 oder zumindest ein Teil der Stirnfläche 30 bildet somit eine Messfläche zum Messen der Temperatur mittels der Bildaufzeichnungseinrichtung 36, wie nachfolgend noch näher erläutet wird.

Gemäß der in Figur 1 gezeigten Ausführungsform umfasst die Vorrichtung 10 nur eine Bildaufzeichnungseinrichtung 36, die der Stirnfläche 30 zugeordnet ist. Nach weiteren Ausführungsbeispielen kann eine weitere Bildaufzeichnungseinrichtung 36 vorgesehen sein, die der Stirnfläche 28 zugeordnet ist. Eine dritte Möglichkeit besteht darin, dass nur eine der Stirnfläche 28 zugeordnete Bildaufzeichnungseinrichtung 36 vorgesehen ist.

Nach weiteren nicht dargestellten Ausführungsbeispielen kann die wenigstens eine Messfläche 52 auch von einer beliebig gelegten Schnittfläche des Katalysatorträgers 26 gebildet sein. Beispielsweise kann ein Katalysator mit einer schräg angeschnittenen Messfläche präpariert werden oder in mehrere Trägerblöcke aufgeschnitten werden, so dass sich Messflächen zwischen zwei Trägerblöcken ergeben und somit Temperaturen in unterschiedlichen Tiefen des Katalysatorträgers 26 ermittelt werden können.

Die Bildaufzeichnungseinrichtung 36 ist mit einer Auswerteeinrichtung 44 verbunden. Der Auswerteeinrichtung 44 ist eine Kalibrierung 46 zugeordnet, die mit wenigstens einem Temperatursensor 48 verbunden ist, der in einen Bereich von 0 bis 2 mm von der Stirnfläche 30 (und/oder Stirnfläche 28) in axialer Richtung in die Katalysatorwicklung 26 eingebracht ist. Hierfür werden die Thermoelemente 48 in die Zellen beziehungsweise Kanäle des Metallträgers 26 eingeschoben und der Zellaustritt verschlossen, beispielsweise mit Keramikkleber zugeklebt, um eine Durchströmung der Zellen mit Abgas zu verhindern.

Die Auswerteeinrichtung 44 und die Kalibrierung 46 sind mit einem Speichermittel 50 verbunden.

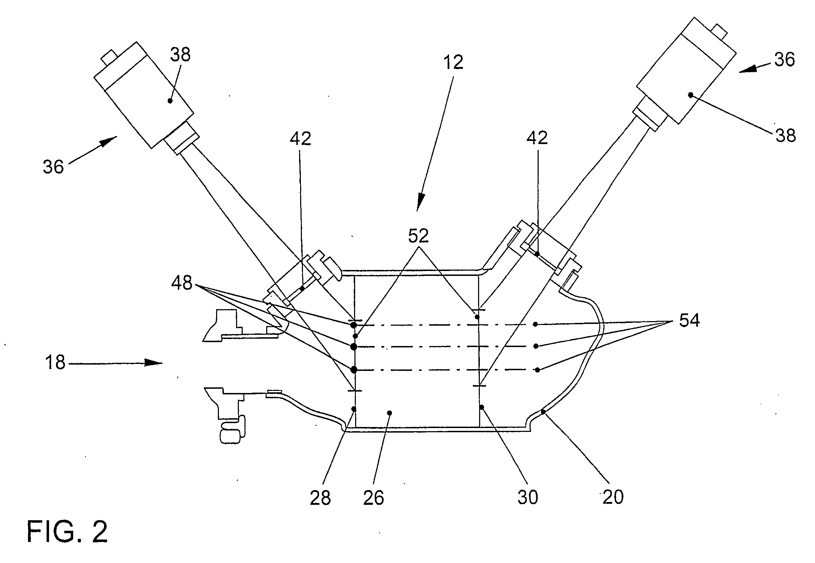

Figur 2 zeigt die Anordnung eines Katalysators 12 innerhalb der Vorrichtung 10 nach einer weiteren Ausführungsvariante, wobei gleiche Teile wie in Figur 1 mit gleichen Bezugszeichen versehen und nicht nochmals erläutert sind. Hierbei sind dem innerhalb des Gehäuses 20 angeordneten Katalysatorträger 26 zwei als Nah-Infrarot-Thermographiekameras 38 ausgebildete Bildaufzeichnungseinrichtungen 36 zugeordnet. In dem Gehäuse 20 des Katalysators 12 sind hierbei zwei optische Fenster 42 vorgesehen, durch die eine Betrachtung der Stirnflächen 28 und 30 möglich ist. Entsprechend dem Abstand der Kameras 36 zum optischen Fenster 42, der Größe des optischen Fensters 42 und der Größe der Stirnflächen 28 und 30 des Katalysatorträgers 26 ergibt sich hierdurch eine Messfläche 52 auf der Stirnfläche 28 beziehungsweise auf der Stirnfläche 30. Die optischen Fenster 42 bestehen beispielsweise aus einem Saphirglas.

Bei einer Anordnung der optischen Achse der Thermographiekameras 38 von 49° (Winkel zur Stirnflächenebene), Verwendung eines optischen Fensters mit 25 mm-Durchmesser und gegebenen Abstand liegt der Abstrahlungswinkel der Zellwände des Katalysatorträgers 26 zwischen 42 und 56°. Hieraus und aufgrund der rauen Oberfläche der Katalysatorbeschichtung (Washcoat) und der geringen Kanaldurchmesser ergibt sich im typischen Sichtbereich der Messflächen 52 eine geringe Winkelabhängigkeit für den Emissionskoeffizienten ε und damit eine hohe örtliche Messgenauigkeit.

Nachfolgend wird auf die Messung der Oberflächentemperatur auf der Messfläche 52 der Stirnfläche 28 Bezug genommen.

In die Stirnfläche 28 sind im Bereich der Messfläche 52 die Thermoelemente (Temperatursensoren) 48 integriert, die über hier angedeutete Signalleitungen 54 mit der Kalibrierung 46 verbunden sind.

### Die in den Figuren 1 und 2 dargestellte Vorrichtung 10 zeigt folgende Funktion:

Mittels des Motorenprüfstandes wird die Verbrennungskraftmaschine 14 in dynamischen Testzyklen gefahren. Hierbei erfolgt eine Ansteuerung der Verbrennungskraftmaschine 14 über das Motorsteuergerät 32, wobei Betriebsparameter der Verbrennungskraftmaschine 14 eingestellt werden, die aus Testfahrten eines Kraftfahrzeuges mit einer auf dem Prüfstand verwendeten entsprechenden Verbrennungskraftmaschine 14 gewonnen wurden. Entsprechend der Ansteuerung der Verbrennungskraftmaschine 14 erfolgt eine Beaufschlagung des Abgasstranges 16 mit dem Abgas 18. Das Abgas 18 besitzt hierbei eine von den eingestellten Betriebsparametern der Verbrennungskraftmaschine 14 abhängige Temperatur und Schadstoffzusammensetzung, wobei der Katalysator 12 mit diesem temperierten Abgas 18 beaufschlagt wird. Das Abgas 18 trifft auf die Stirnfläche 28 des Katalysatorträgers 26 und somit auch auf die Messfläche 52. Über die Nah-Infrarot-Thermographiekamera 36 wird die Messfläche 52 abgetastet und eine Bildsequenz aufgenommen. Entsprechend der Ansteuerung der Kamera 36, beispielsweise mit einer Taktung ≥ 50 Hz, wird mit entsprechender Wiederholfrequenz jeweils eine Bildsequenz aufgenommen.

Hierbei wird jeweils die Intensität der Festkörperstrahlung im Nah-Infrarot-Wellenlängenbereich im Vollbild über die Messfläche 52 aufgezeichnet. Die entsprechenden von der Kamera 36 gelieferten digitalen Signale werden der Auswerteeinrichtung 44 zugeführt. Mittels der Kalibrierung 46 wird der Intensität der Wärmestrahlung des Katalysatorträgers 26 im Bereich der Messfläche 52, eine entsprechende Festkörpertemperatur zugeordnet. Hierdurch lassen sich maximale Temperaturbelastungen und reale zeitliche Temperaturänderungen (Transienten) ermitteln.

Es werden für die angefahrenen Motorbetriebspunkte somit die tatsächlichen Festkörpertemperaturen des Katalysatorträgers 26 ermittelt und in Kennlinien beziehungsweise Kennfeldern betriebspunktabhängig im Motorsteuergerät abgespeichert. Um eine exakte zeitliche Zuordnung einer Temperatur beziehungsweise eines örtlich über die Messfläche aufgelösten Temperaturverlaufs zu einem angefahrenen Betriebspunkt zu gewährleisten, erfolgt vorzugsweise eine Synchronisation der Temperaturmessung mit dem aktuellen Betriebspunkt durch Triggerung. Hierfür wird beispielsweise ein von dem Prüfstand ausgegebenes 5V-Triggersignal zur Auslösung der Temperaturerfassung verwendet.

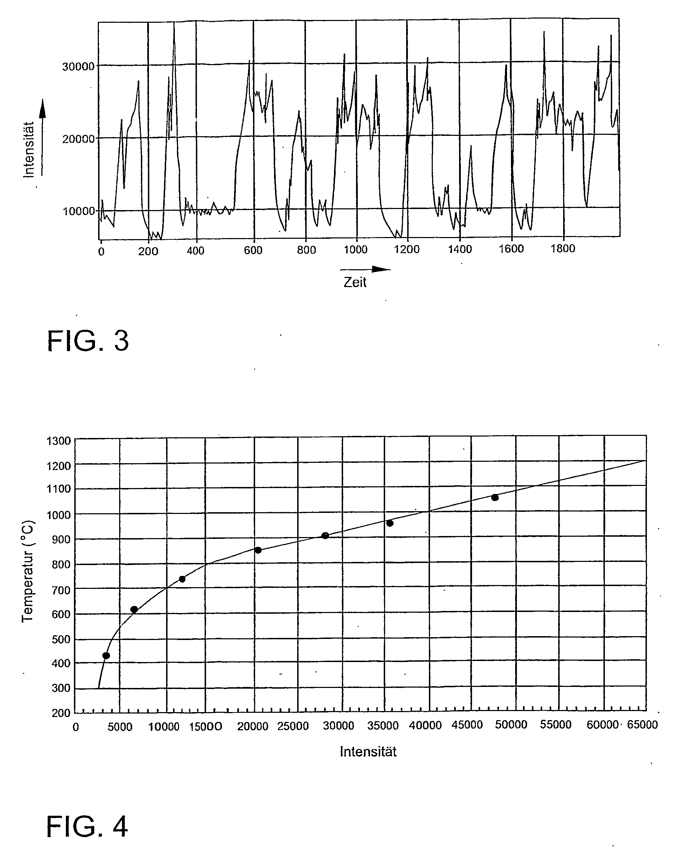

Die Zuordnung der Festkörpertemperaturen zur Intensität wird anhand von stationären Motorbetriebspunkten der Verbrennungskraftmaschine 14 ermittelt. Hierzu wird die Verbrennungskraftmaschine 14 in einem definierten Betriebspunkt gefahren und mittels der Temperatursensoren 48 die Bauteiltemperatur an der Stirnfläche 28 gemessen. Das Anfahren der stationären Betriebspunkte erfolgt über eine Mindestzeit, so dass sichergestellt ist, dass sich eine definierte Temperatur an der Stirnfläche 28 einstellt. Diese Temperatur wird über die Temperatursensoren 48 gemessen und der Kalibrierung 46 mitgeteilt. Gleichzeitig werden während dieser Kalibrierphase mittels der Kamera 36 die Bildsequenzen der Messfläche 52 aufgezeichnet, so dass entsprechend der aufgenommenen Intensität eine exakte Zuordnung zu einer definierten Temperatur auf der Oberfläche 28 erfolgen kann (vgl. Figur 4). Es werden somit die stationären, eingeschwungenen Temperaturen (Gleichgewichtstemperaturen) auf der Stirnfläche 28 gemessen und zur Kalibrierung der Kamera 36 herangezogen. Dieses Kalibrieren der Kamera 36 kann in festgelegten Zyklen beispielsweise vor einem Messzyklus und/oder nach einem Messzyklus erfolgen. Hierdurch werden die optische Messung mittels der Kamera 36 beeinflussende Störfaktoren eliminierbar. Dies kann beispielsweise eine Verschmutzung, beispielsweise Verrußung, des optischen Fensters 42 sein.

Figur 3 zeigt den Verlauf der Intensität über der Zeit. Die auf der Zeitachse angegebenen Zahlenwerte beziehen sich auf die Anzahl der aufgezeichneten Bilder (frame rate), aus welcher in Anhängigkeit von der Aufzeichnungsfrequenz sich die Zeit ermitteln lässt. Der Intensitätsverlauf ist beispielhaft für einen dynamischen Fahrzyklus (EWP-Zyklus) der Verbrennungskraftmaschine 14 und einer Abtastfrequenz von 50 Hz der Nah-Infrarot-Thermographiekamera 36. Die Intensität ist hier beispielhaft für ein Pixel oder einen gemittelten Bereich von mehreren Pixeln der Kamera 36 dargestellt. Auffallend ist die starke zeitliche Temperaturfluktuation an der Messfläche mit kurzfristigen Temperaturspitzen von über 30.000 Intensitätseinheiten entsprechend Festkörpertemperaturen von über 900 °C. Es ist klar, dass entsprechend der technischen Ausstattung der Kamera 36 diese eine Vielzahl von Pixel besitzt, mit der die Messfläche 52 abgetastet wird. Die hier verwendete Kamera 36 (CCD 14 bit, InGaAs-Elemente) besitzt beispielsweise eine Auflösung von 320x256 Pixel.

Die Intensität wird mittels einer ermittelten Kalibrierkurve über die Kalibrierung 46 in einen Temperaturverlauf über der Zeit gewandelt. Figur 4 zeigt beispielsweise den Verlauf einer Kalibrierkurve, wobei hier die Temperatur über der Intensität aufgetragen ist. Wie erläutert, erfolgt die Aufzeichnung der Kalibrierkurve mittels gleichzeitiger Temperaturmessung an der Messfläche 52 durch die Thermosensoren 48 und die Kamera 36 bei angefahrenen stationären Betriebspunkten der Verbrennungskraftmaschine 14, zum Beispiel bei 16-Bit-Graustufendarstellung. Im dargestellten Beispiel wurden die stationären Motorbetriebspunkte unter stöchiometrischen Bedingungen mit λ = 1 gemessen.

Es wird deutlich, dass ein nicht-linearer Bereich bei einer Intensität, zum Beispiel bei 16-Bit-Graustufendarstellung von zirka 5.000 bis zirka 20.000, und ein sich anschließender linearer Bereich der Kalibrierkurve gegeben ist. Derartige Kalibrierkurven werden vor und gegebenenfalls nach der erfindungsgemäßen Messung der Oberflächentemperatur der Stirnfläche 28, insbesondere im Bereich der Messfläche 52, aufgenommen, um Verschmutzungen des optischen Fensters 42, beispielsweise infolge Rußablagerung, und wärmebedingte Änderungen von thermischen Eigenschaften des Katalysators 12, insbesondere des Wash-Coats und/oder des Metallträgers 26, zu berücksichtigen. Die Genauigkeit der Messung wird damit erheblich erhöht.

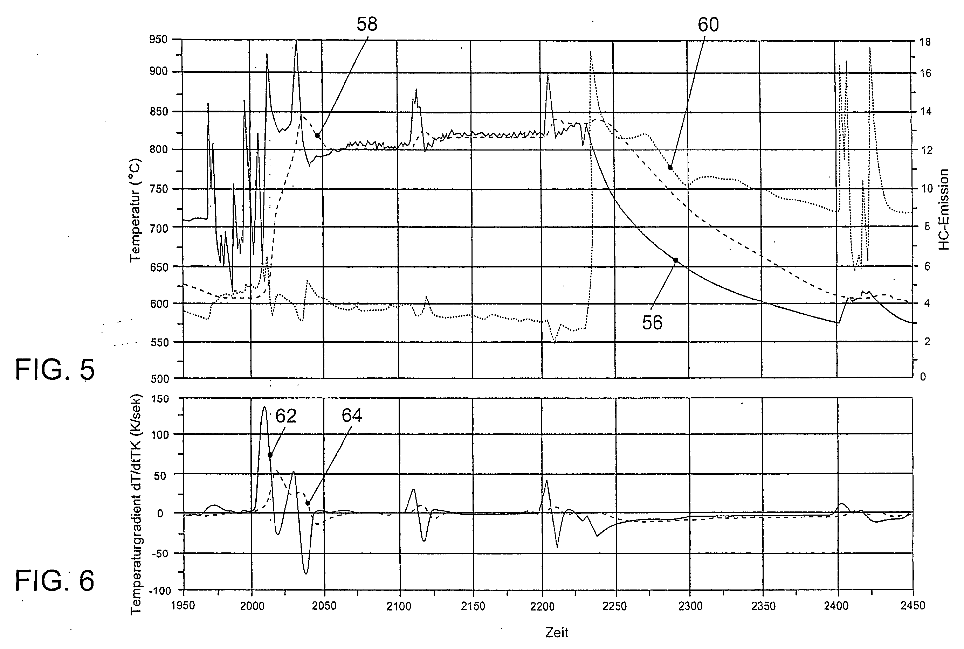

Figur 5 zeigt vergleichend drei Kurven 56, 58 und 60, die mit verschiedenen Messsystemen gemessene Temperaturverläufe an der Messfläche 52 über der Zeit darstellen. Die Kurve 56 zeigt den Verlauf der Temperatur, wie er mit der Vorrichtung 10 und dem erfindungsgemäßen Verfahren ermittelt wurde. Zum Vergleich zeigt die Kurve 58 den Verlauf der Temperatur, wie er ausschließlich mit Thermoelementen 48 ermittelt wurde.

Schließlich stellt die Kurve 60 den Verlauf der stromauf des Katalysators 12 mit einem HC-Sensor gemessenen HC-Emission dar. Eine in Abhängigkeit von der HC-Emission berechnete Katalysatortemperatur (nicht dargestellt) berücksichtigt die bei der exothermen Konvertierung der Kohlenwasserstoffe HC am Katalysator 12 freigesetzte Wärme sowie eine gewisse zeitliche Verzögerung mit der die Katalysatorerwärmung auftritt. Die Synchronisation der verschiedenen Messtechniken erfolgt durch Triggerung durch den Motorprüfstand.

Es wird deutlich, dass die Kurve 56 gegenüber der Kurve 58 ein zeitlich schnelleres Ansprechen der Messung und einen ausgeprägteren Kurvenverlauf zeigt. Dies liegt an der unmittelbaren Ist-Zeitmessung und der Vermeidung von thermischen Trägheiten bei den Messmethoden aus dem Stand der Technik. Es ist ferner erkennbar, dass aufgrund der hohen Zeitauflösung des erfindungsgemäßen Systems kurzfristige Temperaturspitzen erkannt werden, die beispielsweise mit Thermoelementen nicht aufgelöst werden können.

Figur 6 schließlich zeigt zwei Kurven 62 und 64 des zeitlichen Temperaturgradienten über der Zeit, das heißt der ersten Ableitung der Kurve 56 beziehungsweise der Kurve 58 aus Figur 5. Demgemäß entspricht die Kurve 62 dem Ansprechverhalten nach dem erfindungsgemäßen Verfahren und der Vorrichtung 10 und die Kurve 64 dem Ansprechverhalten bei Messung mittels des aus dem Stand der Technik bekannten Verfahrens durch die Verwendung von Thermoelementen. Auch hier wird der sehr viel ausgeprägtere Kurvenverlauf der Kurve 62 und das zeitlich frühere Ansprechen der Kurve 62 gegenüber der Kurve 64 deutlich. Im Einzelnen verdeutlichen die zeitlich früher auftretenden Extrema der Kurve 62 ein schnelleres Ansprechverhalten auf die veränderten Temperaturbedingungen (kein Zeitverzug) und die höheren Intensitäten der Kurve 62 eine bessere Zeitauflösung (steilere Peakflanken der Kurve 56).

Bei der Aufzeichnung des zeitlichen Temperaturgradienten (Temperaturtransienten) kann eine Mittelung der Messwerte erfolgen. Entsprechend der Wiederholfrequenz der Kamera 36 ergeben sich eine Anzahl von Messwerten pro Sekunde. Bei einer Mittelung auf eine Frequenz deutlich kleiner als die Aufzeichnungsfrequenz, beispielsweise von 50 Hz Aufzeichnungsfrequenz auf 10 Hz, wird für die gewählte Anzahl von Messungen ein Mittelwert gebildet. Hierdurch können extrem kurzfristige Temperaturschwankungen, die keinen Einfluss auf die tatsächliche Temperatur der Katalysatorwicklung 26 haben, ausgeblendet werden und unberücksichtigt bleiben. Diese sehr kurzfristigen Temperaturschwankungen werden aufgrund eines verzögerten Wärmeüberganges über die katalytisch wirksame Beschichtung nicht am Träger wirksam.

Anhand der vorstehenden Erläuterungen wird deutlich, dass durch Wahl der Abtastfrequenz der Kamera 36 hoch zeitauflösend über die Messfläche 52 Temperaturimpulse bis in den Millisekunden-Bereich erfasst werden können. Somit steht eine Vorrichtung 10 und ein Verfahren zur Verfügung, mittels denen berührungslos in Ist-Zeit eine zuverlässige Messung der Oberflächentemperatur, hier insbesondere an der Stirnseite 28 und/oder 30 eines Katalysatorträgers 26, erfolgen kann. Beispielsweise können so im dynamischen Motorbetrieb typischerweise auftretende Temperaturimpulse ΔT von 20 bis 200 K in einem Zeitraster mit 10 ms-Schritten aufgelöst werden. Für den typischen Messbereich von Hochtemperatureffekten von 500 bis über 1200 °C eignet sich besonders der nahe Infrarotbereich (NIR), während für die Untersuchung im Niedrigtemperaturbereich (Kaltstarteffekte) der mittlere Infrarotbereich (MIR) empfindlicher ist.

Neben der sehr hohen zeitlichen Auflösung des Temperaturverlaufs gestattet das erfindungsgemäße System auch eine sehr gute Ortsauflösung über die gesamte Messfläche durch Aufnahme eines zweidimensionalen Intensitätsprofils. Hierdurch können auch infolge inhomogener Anströmung des Katalysators durch das Abgas auftretende lokale Temperaturspitzen erfasst und unterdrückt werden.

Weiterhin ist als Vorteil hervorzubeben, dass das erfindungsgemäße Verfahren die Erfassung der tatsächlichen Bauteiltemperatur gestattet, die praktisch nicht durch Temperatureffekte des einströmenden Abgases verfälscht wird.

Durch Übernahme der Ergebnisse in die Motorapplikation, das heißt die Erstellung der Kennlinien und Kennfelder mit der erfindungsgemäßen Vorgehensweise, lassen sich im dynamischen Realverkehr auftretende Temperaturspitzen wirkungsvoll unterdrücken. Die Alterung und Schädigung des Katalysators kann damit reduziert und eine höhere Abgassicherheit erzielt werden.

### BEZUGSZEICHENLISTE

- 10: Vorrichtung
- 12: Katalysator
- 14: Verbrennungskraftmaschine
- 16: Abgasstrang
- 18: Abgas
- 20: Gehäuse
- 22: Einlassstutzen
- 24: Auslassstutzen
- 26: Katalysatorträger
- 28: erste Stirnfläche
- 30: zweite Stirnfläche
- 32: Motorsteuergerät
- 34: Getriebesteuergerät
- 36: Bildaufzeichnungseinrichtung
- 38: Nah-Infrarot-Thermographiekamera
- 40: Objektiv
- 42: optisches Fenster
- 44: Auswerteeinrichtung
- 46: Kalibrierung
- 48: Thermosensoren
- 50: Speichermittel
- 52: Messfläche
- 54: Signalleitungen
- 56: thermographisch gemessener Temperaturverlauf
- 58: mittels Thermoelement gemessener Temperaturverlauf
- 60: Verlauf der HC-Emission
- 62: thermographisch gemessener Temperaturgradient
- 64: mittels Thermoelement gemessener Temperaturgradient

## Patentansprüche

1. Verfahren zur Erstellung von Kennlinien oder Kennfeldern zur Steuerung von Verbrennungskraftmaschinen derart, dass dynamisch auftretende katalysatorschädigende Temperaturspitzen erkannt und unterdrückt werden, wobei eine Verbrennungskraftmaschine (14) in dynamischen Testzyklen mit vorbestimmten Betriebspunkten angesteuert wird und die Temperatur eines von einem Abgas der Verbrennungskraftmaschine (14) durchströmten Katalysators (12) ermittelt wird und die Katalysatortemperatur in den Kennlinien oder Kennfeldern in Abhängigkeit von den Betriebspunkten zeitlich diesen zugeordnet gespeichert wird und wobei zur Temperaturermittlung ein Objektiv (40) einer Bildaufzeichnungseinrichtung (36) zumindest zeitweise auf wenigstens eine von dem Abgas durchströmte Messfläche (52) des Katalysators (12) gerichtet wird, wenigstens eine Bildsequenz der wenigstens einen Messfläche (52) mit einer Bildwiederholfrequenz von mindestens 1 Hz aufgenommen wird und aus der wenigstens einen Bildsequenz die Zeitlich aufgeloste Oberflächentemperatur der wenigstens einen Messfläche (52) ermittelt wird.

2. Verfahren nach Anspruch 1, **dadurch gekennzeichnet, dass** ein Temperaturprofil der wenigstens einen Messfläche (52) ermittelt wird.

3. Verfahren nach Anspruch 1 oder 2, **dadurch gekennzeichnet, dass** die Oberflächentemperatur der wenigstens einen Messfläche (52) thermographisch mit einer Thermographiekamera, insbesondere einer Infrarot-Thermographiekamera, ermittelt wird.

4. Verfahren nach einem der vorhergehenden Ansprüche, **dadurch gekennzeichnet, dass** während der Temperaturmessung die Verbrennungskraftmaschine in dynamischen Testzyklen gefahren wird.

5. Verfahren nach einem der vorhergehenden Ansprüche, **dadurch gekennzeichnet, dass** die Bildsequenz der wenigstens einen Messfläche (52) mit einer Bildwiederholfrequenz von mindestens 50 Hz aufgenommen wird.

6. Verfahren nach einem der vorhergehenden Ansprüche, **dadurch gekennzeichnet, dass** die Oberflächentemperatur an wenigstens einer Stirnfläche (28, 30) des Katalysators (12) gemessen wird.

7. Verfahren nach einem der vorhergehenden Ansprüche, **dadurch gekennzeichnet, dass** eine Intensität einer Festkörperstrahlung im Nah-Infrarot-Wellenlängenbereich (NIR) oder Mittel-Infrarot-Wellenlängenbereich (MIR) im Vollbild über die Messfläche (52) aufgezeichnet wird.

8. Verfahren nach einem der vorhergehenden Ansprüche, **dadurch gekennzeichnet, dass** die Intensität der Festkörperstrahlung kalibriert wird, um die Intensität in ein Temperaturprofil zu wandeln.

9. Verfahren nach Anspruch 8, **dadurch gekennzeichnet, dass** die Kalibrierung durch Messung einer definierten Vergleichstemperatur der Messfläche (52) erfolgt.

10. Verfahren nach Anspruch 9, **dadurch gekennzeichnet, dass** die Vergleichstemperatur zumindest vor und/oder nach jedem Messzyklus gemessen wird.

11. Verfahren nach Anspruch 9 oder 10, **dadurch gekennzeichnet, dass** die Messung der Vergleichstemperatur der Messfläche (52) mit einem Temperatursensor (48) erfolgt, der unmittelbar in der wenigstens einen Messfläche (52) des Katalysators (12) angeordnet ist.

12. Verfahren nach Anspruch 11, **dadurch gekennzeichnet, dass** der wenigstens eine Temperatursensor (48) zwischen 0 und 2 mm axial beabstandet zur Messfläche (52) im Katalysator (12) angeordnet ist und über rückwärtig an die Messfläche (52) herangeführte Signalleitungen (54) mit einer Kalibrierung (46) verbunden ist.

13. Verfahren nach einem der vorhergehenden Ansprüche, **dadurch gekennzeichnet, dass** der Katalysator (12) in einem Gehäuse mit wenigstens einem optischen Fenster (42) angeordnet ist und die Bildsequenz der wenigstens einen Messfläche (52) durch das wenigstens eine optische Fenster (42) aufgenommen wird, wobei das optische Fenster (42) derart angeordnet ist, dass die wenigstens eine Messfläche (52) in einer Betrachtungsebene der wenigstens einen Bildaufzeichnungseinrichtung (36) liegt.

14. Verfahren nach einem der vorhergehenden Ansprüche, **dadurch gekennzeichnet, dass** der Katalysator (12) ein Metallkatalysator oder ein Keramikkatalysator ist.

15. Verfahren nach einem der vorhergehenden Ansprüche, **dadurch gekennzeichnet, dass** die Messfläche (52) zumindest teilweise von einer Stirnfläche (28, 30) des Katalysators (12) gebildet wird.

16. Verfahren nach einem der vorhergehenden Ansprüche, **dadurch gekennzeichnet, dass** die Messung auf einem Motorprüfstand, insbesondere einem dynamischen Motorprüfstand, erfolgt.

## Claims

1. Method for generating characteristic functions or arrays of characteristic functions for controlling combustion engines in such a way that dynamically occurring temperature peaks that are harmful to the catalytic converter are detected and suppressed, a combustion engine (14) being driven in dynamic test cycles with predetermined operating points and the temperature of a catalytic converter (12) that is flowed through by an exhaust gas of the combustion engine (14) being determined and the temperature of the catalytic converter being stored in the characteristic functions or arrays of characteristic functions in dependence on the operating points that are temporally assigned to them and the temperature being determined by directing a lens (40) of an image recording device (36) at least at times onto at least one measuring area (52) of the catalytic converter (12) that is flowed through by the exhaust gas, recording at least one image sequence of the at least one measuring area (52) with an image refresh rate of at least 1 Hz and determining from the at least one image sequence the temporally resolved surface temperature of the least one measuring area (52).

2. Method according to Claim 1, **characterized in that** a temperature profile of the at least one measuring area (52) is determined.

3. Method according to Claim 1 or 2, **characterized in that** the surface temperature of the at least one measuring area (52) is determined thermographically with a thermographic camera, in particular an infrared thermographic camera.

4. Method according to one of the preceding claims, **characterized in that**, during the temperature measurement, the combustion engine is operated in dynamic test cycles.

5. Method according to one of the preceding claims, **characterized in that** the image sequence of the at least one measuring area (52) is recorded with an image refresh rate of at least 50 Hz.

6. Method according to one of the preceding claims, **characterized in that** the surface temperature is measured on at least one end face (28, 30) of the catalytic converter (12).

7. Method according to one of the preceding claims, **characterized in that** an intensity of a solid-state radiation in the near-infrared wavelength range (NIR) or mid-infrared wavelength range (MIR) is recorded as a frame image over the measuring area (52).

8. Method according to one of the preceding claims, **characterized in that** the intensity of the solid-state radiation is calibrated, in order to convert the intensity into a temperature profile.

9. Method according to Claim 8, **characterized in that** the calibration is performed by measuring a defined comparative temperature of the measuring area (52).

10. Method according to Claim 9, **characterized in that** the comparative temperature is measured at least before and/or after each measuring cycle.

11. Method according to Claim 9 or 10, **characterized in that** the measurement of the comparative temperature of the measuring area (52) is performed with a temperature sensor (48), which is arranged directly in the at least one measuring area (52) of the catalytic converter (12).

12. Method according to Claim 11, **characterized in that** the at least one temperature sensor (48) is arranged in the catalytic converter (12) at an axial distance of between 0 and 2 mm from the measuring area (52) and is connected to a calibrating means (46) by means of signal lines (54) led up to the rear of the measuring area (52).

13. Method according to one of the preceding claims, **characterized in that** the catalytic converter (12) is arranged in a housing with at least one optical window (42) and the image sequence of the at least one measuring area (52) is recorded through the at least one optical window (42), the optical window (42) being arranged in such a way that the at least one measuring area (52) lies in a viewing plane of the at least one image recording device (36).

14. Method according to one of the preceding claims, **characterized in that** the catalytic converter (12) is a metal catalytic converter or a ceramic catalytic converter.

15. Method according to one of the preceding claims, **characterized in that** the measuring area (52) is at least partly formed by an end face (28, 30) of the catalytic converter (12).

16. Method according to one of the preceding claims, **characterized in that** the measurement is performed on an engine test stand, in particular a dynamic engine test stand.

## Revendications

1. Procédé d'élaboration de courbes caractéristiques ou de diagrammes caractéristiques pour commander des moteurs à combustion interne, de sorte que des crêtes de températures naissant de façon dynamique et détériorant le catalyseur puissent être reconnues et supprimées, un moteur à combustion interne (14) étant activé en cycles de test dynamiques avec des points de fonctionnement prédéterminés et la température d'un catalyseur (12) traversé par les gaz d'échappement du moteur à combustion interne (14) étant déterminée et la température du catalyseur étant mémorisée dans les courbes caractéristiques ou les diagrammes caractéristiques, en fonction des points de fonctionnement dynamiques en leur étant associée dans le temps, et pour la détermination de la température, un objectif (40) d'un dispositif d'enregistrement d'image (36) étant dirigé au moins temporairement sur au moins une surface de mesure (52) du catalyseur (12) traversée par les gaz d'échappement, au moins une séquence d'images de la au moins une surface de mesure (52) étant enregistrée avec une fréquence de répétition d'image d'au moins 1 Hz et à partir de la au moins une séquence d'images, la température superficielle répartie dans le temps de la au moins une surface de mesure (52) étant déterminée.

2. Procédé selon la revendication 1, **caractérisé en ce que**, un profil de température de la au moins une surface de mesure (52) est déterminé.

3. Procédé selon la revendication 1 ou 2, **caractérisé en ce que**, la température superficielle de la au moins une surface de mesure (52) est déterminée par thermographie, avec une caméra thermographique, notamment une caméra thermographique à infrarouge.

4. Procédé selon l'une quelconque des revendications précédentes, **caractérisé en ce que**, pendant la mesure de la température, le moteur à combustion interne fonctionne par cycles de test dynamiques.

5. Procédé selon l'une quelconque des revendications précédentes, **caractérisé en ce que**, la séquence d'images de la au moins une surface de mesure (52) est enregistrée avec une fréquence de répétition d'image d'au moins 50 Hz.

6. Procédé selon l'une quelconque des revendications précédentes, **caractérisée en ce que**, la température superficielle est mesurée sur au moins une surface frontale (28, 30) du catalyseur (12).

7. Procédé selon l'une quelconque des revendications précédentes, **caractérisé en ce que**, une intensité d'un rayonnement de corps solide est enregistrée dans la gamme de longueurs d'ondes de l'infrarouge, proche ou dans la gamme de longueurs d'ondes de l'infrarouge moyen, en image pleine sur la surface de mesure (52).

8. Procédé selon l'une quelconque des revendications précédentes, **caractérisé en ce que** l'intensité du rayonnement de corps solide est calibrée, pour transformer l'intensité en un profil de température.

9. Procédé selon la revendication 8, **caractérisé en ce que**, le calibrage est assuré par mesure d'une température de comparaison définie de la surface de mesure (52).

10. Procédé selon la revendication 9, **caractérisé en ce que**, la température de comparaison est mesurée au moins avant et/ou après chaque cycle de mesure.

11. Procédé selon la revendication 9 ou 10, **caractérisé en ce que**, la mesure de la température de comparaison de la surface de mesure (52) est assurée par une sonde thermique (48) qui est disposée directement dans la au moins une surface de mesure (52) du catalyseur (12).

12. Procédé selon la revendication 11, **caractérisé en ce que**, la au moins une sonde thermique (48) est disposée dans le catalyseur (12) à un écart de 0 à 2 mm en direction axiale par rapport à la surface de mesure (52) et **en ce qu'**elle est reliée avec un calibrage (46) via des lignes de signalisation (54) amenées par l'arrière vers la surface de mesure (52).

13. Procédé selon l'une quelconque des revendications précédentes, **caractérisé en ce que**, le catalyseur (12) est disposé dans un boîtier avec au moins une fenêtre optique (42) et **en ce que** la séquence d'image de la au moins une surface de mesure (52) est enregistrée à travers la au moins une fenêtre optique (42), la fenêtre optique (42) étant disposée de sorte que la au moins une surface de mesure (52) se situe dans un plan d'observation du au moins un dispositif d'enregistrement d'image (36).

14. Procédé selon l'une quelconque des revendications précédentes, **caractérisé en ce que**, le catalyseur (12) est un catalyseur métallique ou un catalyseur céramique.

15. Procédé selon l'une quelconque des revendications précédentes, **caractérisé en ce que** la surface de mesure (52) est formée au moins partiellement par une surface frontale (28, 30) du catalyseur (12).

16. Procédé selon l'une quelconque des revendications précédentes, **caractérisé en ce que** la mesure est assurée sur un banc d'essai pour moteur, notamment sur un banc d'essai dynamique pour moteur.
